# EUROPÄISCHE PATENTANMELDUNG

(11) **EP 4 552 905 A2**
(43) Veröffentlichungstag der Anmeldung: **14.05.2025**
(21) Anmeldenummer: 24211622.6
(22) Anmeldetag: 08.11.2024
(51) Int. Cl.: B60L 53/10, B60L 53/30, B60L 53/67

(54) **SCHNELLLADESTATION FÜR ELEKTROFAHRZEUGE**

(30) Priorität: 08.11.2023 DE 102023130947
(71) Anmelder: Compleo Charging Solutions GmbH & Co. KG, 58513 Lüdenscheid (DE)
(72) Erfinder: REISING, Viktor, 58706 Menden (DE); WOHLFAHRT, Thomas, 45721 Haltern am See (DE); HIDALGO, Santiago, 44797 Bochum (DE)
(74) Vertreter: Gottschald Patentanwälte Partnerschaft mbB

(57) **Zusammenfassung**

Die Erfindung betrifft eine Schnellladestation für Elektrofahrzeuge, wobei die Schnellladestation (1) ein Leistungsmodul (3) aufweist, wobei das Leistungsmodul (3) eine Stromrichteranordnung (4) aufweist, wobei das Leistungsmodul (3) eine Modulsteuereinheit (7) zur Steuerung der Stromrichteranordnung (4) aufweist, wobei das Leistungsmodul (3) eine Kommunikationseinheit (8) aufweist, wobei das Leistungsmodul (3) in einen Standbyzustand versetzt werden kann, in dem die Modulsteuereinheit (7) inaktiv ist, wobei die Schnellladestation (1) eine zentrale Steuereinheit (9) aufweist. Es wird vorgeschlagen, dass die Kommunikationseinheit (8) galvanisch von der Modulsteuereinheit (7) getrennt ist, dass die Schnellladestation (1) ein Netzteil (10) zur Bereitstellung einer Hilfsspannung aufweist, das extern zu dem Leistungsmodul (3) angeordnet ist, dass die Kommunikationseinheit (8) von dem Netzteil (10) mit der Hilfsspannung versorgt wird, dass die Kommunikationseinheit (8) über ein Kommunikationsnetzwerk (11) mit der zentralen Steuereinheit (9) verbunden ist, dass in dem Standbyzustand die Kommunikationseinheit (8) einen Schlafzustand einnimmt, dass im Standbyzustand die Kommunikationseinheit (8) über das Kommunikationsnetzwerk (11) von der zentralen Steuereinheit (9) aufgeweckt werden kann, und, dass die Kommunikationseinheit (8) nach ihrem Aufwecken durch die zentrale Steuereinheit (9) die Modulsteuereinheit (7) aktiviert.

## Beschreibung

Die vorliegende Erfindung betrifft eine Schnellladestation für Elektrofahrzeuge gemäß dem Oberbegriff von Anspruch 1 sowie ein Verfahren zum Betrieb einer Schnellladestation gemäß dem Oberbegriff von Anspruch 11.

Schnellladestationen, auch bekannt als high performance charger, sind Gleichstromladestationen für elektrische Fahrzeuge, insbesondere Automobile, aber auch Lastkraftfahrzeuge, Schiffe und dergleichen. Schnellladestationen sind in der Lage, einen Ladevorgang eines Elektrofahrzeugs in vergleichsweise kurzer Zeit, regelmäßig unter einer Stunde, abzuschließen. Es ist daher möglich, an einer Schnellladestation an einem Tag zehn oder mehr Ladevorgänge durchzuführen. Das führt jedoch auch dazu, dass eine Schnellladestation zwischen den Ladevorgängen und außerhalb der Stoßzeiten, insbesondere nachts, längere Leerlaufzeiten aufweisen kann. Der Standbyverbrauch einer Schnellladestation ist daher längst ein relevantes Verkaufsargument und muss bei der Betrachtung der Gesamtbetriebskosten einer Schnellladestation berücksichtigt werden. Auch generell besteht ein Trend hin zu weniger unnötiger Verwendung von Ressourcen, insbesondere Energie.

Der bekannte Stand der Technik (EP 3 506 471 A1), von dem die Erfindung ausgeht, betrifft eine Schnellladestation gemäß dem Oberbegriff von Anspruch 1. Diese Schnellladestation weist Leistungsmodule auf, die Anschlusspunkten der Schnellladestation zugeordnet werden. Wird ein Leistungsmodul nicht benötigt, schaltet dieses Leistungsmodul eine interne Kommunikationseinheit, eine Modulsteuereinheit und weitere Komponenten ab. Eine zentrale Steuereinheit der Schnellladestation kann entweder einen Schalter im Leistungsmodul direkt ansteuern oder über eine galvanisch getrennte Kommunikationsleitung die interne Spannungsversorgung des Leistungsmoduls aktivieren. Diese galvanische Trennung zwischen zentraler Steuereinheit und (einigen) internen Komponenten der Schnellladestation soll aus Sicherheitsgründen beibehalten werden. Problematisch ist dann jedoch, dass die zentrale Steuereinheit ein Aufwecksignal über eine galvanisch getrennte Kommunikationsverbindung in das Leistungsmodul senden muss. Damit ist höherer Aufwand verbunden, da Standardkommunikationsverbindungen als Anbindung zwischen dem Leistungsmodul und der zentralen Steuereinheit entfallen oder weitere Komponenten, ggf. inklusive Energieversorgung, benötigt werden.

Es ist dabei eine Herausforderung, den bekannten Stand der Technik effizienter und kostengünstiger auszugestalten.

Der Erfindung liegt das Problem zugrunde, die bekannte Schnellladestation derart auszugestalten und weiterzubilden, dass hinsichtlich der genannten Herausforderung eine weitere Optimierung erreicht wird.

Das obige Problem wird durch die Merkmale des kennzeichnenden Teils von Anspruch 1 gelöst.

Wesentlich ist die grundsätzliche Überlegung, dass eine galvanische Trennung erst hinter eine Kommunikationseinheit des Leistungsmoduls verlegt wird, wodurch bei Bedarf Standardkomponenten zur Kommunikation verwendet werden können, beispielsweise extrem energiesparende CAN-Transceiver. So kann ein Kommunikationsnetzwerk zur Kommunikation zwischen Kommunikationseinheit und zentraler Steuereinheit verwendet werden. Weiter kann die Kommunikationseinheit dann von extern des Leistungsmoduls mit Energie versorgt werden, wodurch diverse Vorteile entstehen. Es ist möglich, mehrere Leistungsmodule mit einem Netzteil zu versorgen, dieses Netzteil kann dann alle Leistungsmodule gleichzeitig abschalten und/oder kann auch weitere Komponenten der Schnellladestation versorgen. Es werden weniger Bauteile benötigt und die Effizienz kann verbessert werden.

Im Einzelnen wird vorgeschlagen, dass die Kommunikationseinheit galvanisch von der Modulsteuereinheit getrennt ist, dass die Schnellladestation ein Netzteil zur Bereitstellung einer Hilfsspannung aufweist, das extern zu dem Leistungsmodul angeordnet ist, dass die Kommunikationseinheit von dem Netzteil mit der Hilfsspannung versorgt wird, dass die Kommunikationseinheit über ein Kommunikationsnetzwerk mit der zentralen Steuereinheit verbunden ist, dass in dem Standbyzustand die Kommunikationseinheit einen Schlafzustand einnimmt, dass im Standbyzustand die Kommunikationseinheit über das Kommunikationsnetzwerk von der zentralen Steuereinheit aufgeweckt werden kann, und, dass die Kommunikationseinheit nach ihrem Aufwecken durch die zentrale Steuereinheit die Modulsteuereinheit aktiviert.

Bei einer bevorzugten Ausgestaltung gemäß Anspruch 2 ist vorgesehen, dass mehrere Leistungsmodule in das Kommunikationsnetzwerk eingebunden sind. Der Vorteil einer einfachen Netzwerkkommunikation wird so besonders klar. Die Kommunikationseinheiten werden vorzugsweise von dem Netzteil gemeinsam mit Energie versorgt, wodurch weniger Netzteile benötigt werden. Versorgt das Netzteil noch weitere Komponenten der Schnellladestation mit Energie, muss es auch nicht in Standby versetzt werden.

Gemäß Anspruch 3 kann vorgesehen sein, dass das Leistungsmodul eine LV-Steuereinheit und eine HV-Steuereinheit aufweist. LV steht für low volt und HV für high volt, dabei geht es allerdings um die Zuordnung zu Bereichen des Leistungsmoduls, die HV-Steuereinheit ist also einem Leistungselektronikbereich des Leistungsmoduls zugeordnet und die LV Steuereinheit einem davon galvanisch getrennten Bereich, der insbesondere für Kommunikations- und Steuerzwecke genutzt wird. Im LV Bereich ist die Kommunikationseinheit angeordnet. Die galvanische Trennung kann daher einfach zwischen LV und HV Bereich umgesetzt sein.

Bei einer bevorzugten Ausgestaltung gemäß Anspruch 4 ist das Kommunikationsnetzwerk ein CAN-Bus. CAN-Transceiver mit sehr geringem Standbyverbrauch sind weit erhältlich. Zusätzlich ist ein CAN-Bus auch in der Nähe größerer elektrischer Felder robust und günstig umsetzbar.

Die Ansprüche 5 bis 7 betreffen Ausgestaltungen der Umsetzung des Standbyzustands im Verhältnis zu einem Ladevorgang. Grundsätzlich müssen nicht alle Leistungsmodule aufgeweckt werden, wenn nur einige benötigt werden. Allerdings steht zu Beginn eines Ladevorgangs die, möglicherweise schnell erreichte, Maximalleistung des Elektrofahrzeugs nicht immer fest. Daher wird vorgeschlagen, dass die zentrale Steuereinheit dem Anschlusspunkt Leistungsmodule zuordnet, vorzugsweise so viele wie verfügbar, und diese aufweckt (Anspruch 5). Während des Ladevorgangs können dann einige Leistungsmodule wieder in den Standbyzustand überführt und/oder weitere Leistungsmodule aufgeweckt werden (Anspruch 6). Die zentrale Steuereinheit kann außerdem eine Leistungserhöhung prädizieren und ein weiteres Leistungsmodul rechtzeitig aufwecken, bevor die erhöhte Leistung benötigt wird (Anspruch 7). So können die Leistungsmodule insgesamt länger im Standby verbleiben.

Anspruch 8 gibt bevorzugte Ausgestaltungen des Standbyzustands im Leistungsmodul an. Bei einer Ausgestaltung gemäß Anspruch 9 ist vorgesehen, dass eine interne Hilfsspannungsversorgung im Leistungsmodul existiert. Die Trennung zwischen dem HV Bereich und dem LV Bereich kann dabei so umgesetzt sein, dass die Spannung des Netzteils wesentlich höher ist und intern nur noch geringere Betriebsspannungen benötigt werden, beispielsweise für Treiberstufen der Stromrichteranordnung.

Eine weitere bevorzugte Ausgestaltung betrifft die Möglichkeit, mehrere Leistungsmodule gemeinsam über das Netzteil abzuschalten (Anspruch 10).

Nach einer weiteren Lehre gemäß Anspruch 11, der eigenständige Bedeutung zukommt, wird ein Verfahren zum Betrieb einer Schnellladestation beansprucht.

Dabei ist wesentlich, dass die Kommunikationseinheit galvanisch von der Modulsteuereinheit getrennt ist, dass die Schnellladestation ein Netzteil zur Bereitstellung einer Hilfsspannung aufweist, das extern zu dem Leistungsmodul angeordnet ist, dass die Kommunikationseinheit von dem Netzteil mit der Hilfsspannung versorgt wird, dass die Kommunikationseinheit über ein Kommunikationsnetzwerk mit der zentralen Steuereinheit verbunden ist, dass in dem Standbyzustand die Kommunikationseinheit einen Schlafzustand einnimmt, dass im Standbyzustand die Kommunikationseinheit über das Kommunikationsnetzwerk von der zentralen Steuereinheit aufgeweckt werden kann, und, dass die Kommunikationseinheit nach ihrem Aufwecken durch die zentrale Steuereinheit die Modulsteuereinheit aktiviert.

Auf alle Ausführungen zu der vorschlagsgemäßen Schnellladestation darf verwiesen werden.

Im Folgenden wird die Erfindung anhand einer lediglich Ausführungsbeispiele darstellenden Zeichnung näher erläutert. In der Zeichnung zeigt
- Fig. 1: eine vorschlagsgemäße Schnellladestation,
- Fig. 2: einen Blick in die Schnellladestation und auf die Leistungsmodule,
- Fig. 3: Leistungsmodule sowie Kommunikations- und Leistungspfade und

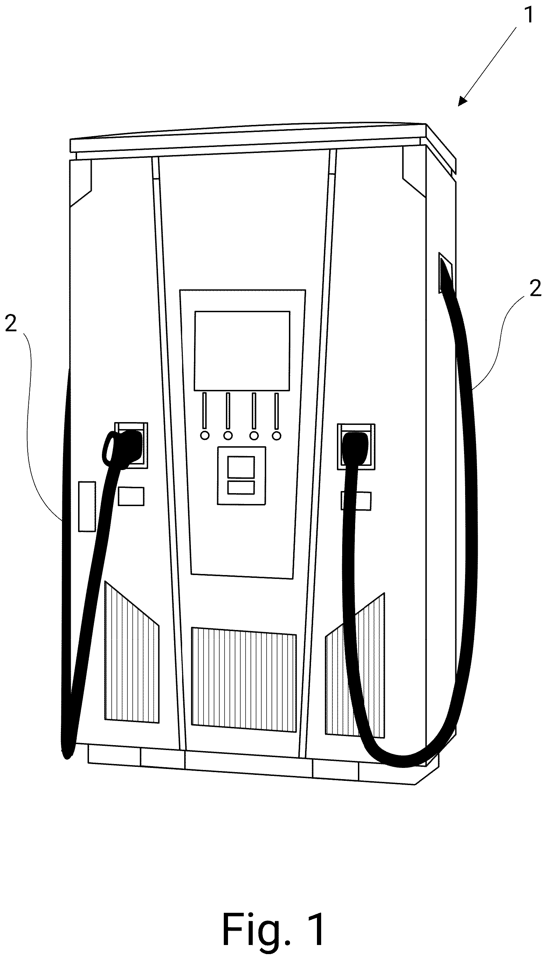

Fig. 1 zeigt eine Außenansicht einer vorschlagsgemäßen Schnellladestation 1 für Elektrofahrzeuge. Diese weist mindestens einen Anschlusspunkt 2 für ein Elektrofahrzeug, hier ein fest angeschlagenes Ladekabel, auf. Vorzugsweise weist die Schnellladestation 1 mindestens, hier genau, zwei Anschlusspunkte 2 auf. Eine Schnellladestation 1 dient zum Laden eines Elektrofahrzeugs mittels Gleichstroms und einer Leistung von zumeist mindestens 50 kW. Üblicherweise ist die Schnellladestation 1 dafür an ein Wechselstromnetz angeschlossen.

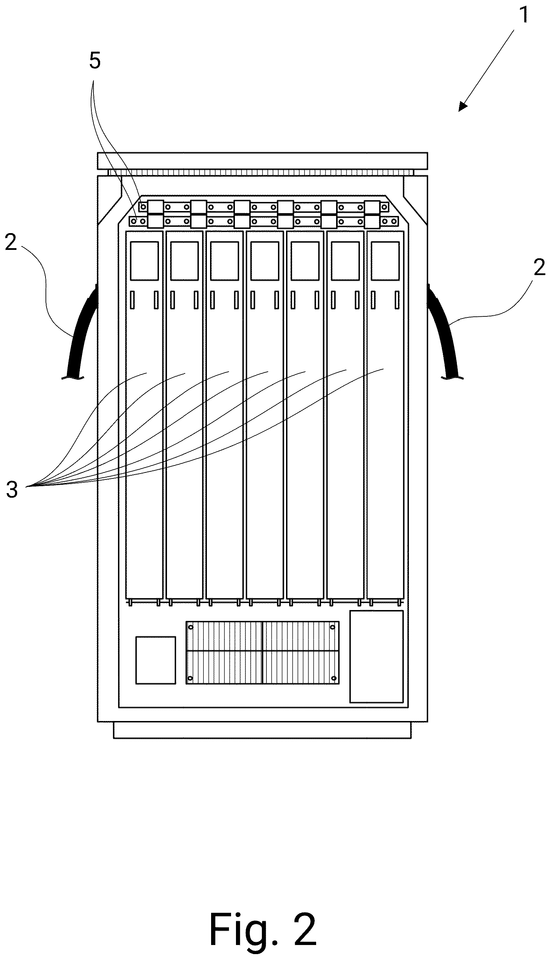

Wie in der geöffneten Ansicht in Fig. 2 erkennbar ist, weist die Schnellladestation 1 mindestens ein einzeln handhabbares Leistungsmodul 3 auf. Hier weist die Schnellladestation 1 sieben Leistungsmodule 3 auf, die jeweils einen Teil der Gesamtleistung der Schnellladestation 1 zur Verfügung stellen, hier beispielsweise jeweils 30 kW. Die Leistungsmodule 3 können hier und vorzugsweise flexibel auf die Anschlusspunkte 2 aufgeteilt werden.

Der Begriff "einzeln handhabbar" ist hier breit zu verstehen. Das Leistungsmodul 3 wiegt hier beispielsweise etwa 39 kg, ist also nicht leicht handhabbar. Es ist jedoch einzeln herausnehmbar und die Komponenten des Leistungsmoduls 3 sind gerade nicht einzeln in der Schnellladestation 1 verbaut.

Das in den Figuren dargestellte und insoweit bevorzugte Ausführungsbeispiel betrifft eine Schnellladestation 1 für Elektrofahrzeuge. Die Schnellladestation 1 weist ein Leistungsmodul 3 auf. Betrachtet wird nun zuerst nur ein Leistungsmodul 3, alle Aussagen zu diesem Leistungsmodul 3 können für weitere Leistungsmodule 3 entsprechend gelten. Das Leistungsmodul 3 weist eine Stromrichteranordnung 4 auf. Die Stromrichteranordnung 4 dient hier und vorzugsweise zur Wandlung einer dreiphasigen Netzspannung als Eingangsspannung der Schnellladestation 1 in eine Gleichspannung. Erkennbar sind im oberen Bereich der Schnellladestation 1 Gleichspannungsschienen 5 zur Verteilung der Ausgangsleistung der Leistungsmodule 3 auf die Anschlusspunkte 2. Der Wechselspannungseingang 6 ist hier im unteren Bereich angeordnet und in Figs. 1 und 2 nicht dargestellt

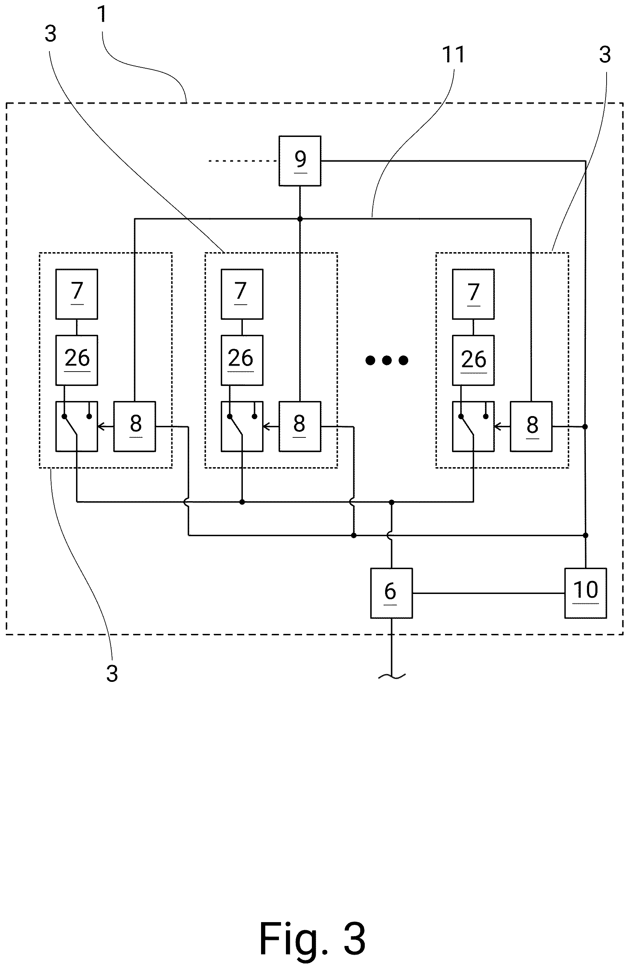

Fig. 3 zeigt einige der Komponenten des Leistungsmoduls 3, soweit diese für die vorliegenden Erläuterungen notwendig sind. Das Leistungsmodul 3 weist eine Modulsteuereinheit 7 zur Steuerung der Stromrichteranordnung 4 auf. Das Leistungsmodul 3 weist weiter eine Kommunikationseinheit 8 auf. Das Leistungsmodul 3 kann in einen Standbyzustand versetzt werden, in dem die Modulsteuereinheit 7 inaktiv ist. Inaktiv bedeutet hier und vorzugsweise, dass die Modulsteuereinheit 7 völlig stromlos ist. Ein Aktivieren der Modulsteuereinheit 7 geht dann mit einem Zuschalten einer Spannungsversorgung einher.

Weiter weist die Schnellladestation 1 eine zentrale Steuereinheit 9 auf. Diese kommuniziert hier und vorzugsweise Parameter zur Steuerung der Stromrichteranordnung 4 an die Kommunikationseinheit 8 und/oder erhält Messwerte von der Kommunikationseinheit 8. Es kann vorgesehen sein, dass die Kommunikationseinheit 8 die einzige Kommunikationseinheit 8 ist, die mit irgendeiner Komponente außerhalb des Leistungsmoduls 3 kommuniziert.

Wesentlich ist nun, dass die Kommunikationseinheit 8 galvanisch von der Modulsteuereinheit 7 getrennt ist. Weiter ist wesentlich, dass die Schnellladestation 1 ein Netzteil 10 zur Bereitstellung einer Hilfsspannung aufweist, das extern zu dem Leistungsmodul 3 angeordnet ist, und, dass die Kommunikationseinheit 8 von dem Netzteil 10 mit der Hilfsspannung versorgt wird.

Es ist vorgesehen, dass die Kommunikationseinheit 8 über ein Kommunikationsnetzwerk 11 mit der zentralen Steuereinheit 9 verbunden ist. In dem Standbyzustand nimmt die Kommunikationseinheit 8 einen Schlafzustand ein. Schlafzustände, bspw. auf Englisch bekannt als sleep, deep sleep, low energy state, oder dergleichen, sind grundsätzlich bekannte Maßnahmen, um den Standbyverbrauch von Komponenten jeglicher Art zu vermindern. Im Standbyzustand kann die Kommunikationseinheit 8 nun über das Kommunikationsnetzwerk 11 von der zentralen Steuereinheit 9 aufgeweckt werden. Nach ihrem Aufwecken durch die zentrale Steuereinheit 9 aktiviert die Kommunikationseinheit 8 die Modulsteuereinheit 7.

Es darf hier angemerkt werden, dass ein Kommunikationsnetzwerk 11 ein Netzwerk ist, das tatsächlich ein Mindestmaß an Netzwerkfähigkeit mitbringt. Hier und vorzugsweise ist das Kommunikationsnetzwerk 11 ein Bus, beispielsweise CAN-Bus. Eine simple Verdrahtung ohne Kommunikationsprotokoll oder dergleichen wird nicht als Kommunikationsnetzwerk 11 angesehen.

Hier und vorzugsweise ist vorgesehen, dass die Schnellladestation 1 mindestens zwei Leistungsmodule 3 aufweist, deren Kommunikationseinheiten 8 über das Kommunikationsnetzwerk 11 mit der zentralen Steuereinheit 9 und vorzugsweise einander kommunizieren sind.

Hier und vorzugsweise ist es außerdem so, dass die Kommunikationseinheiten 8 von dem Netzteil 10 mit der Hilfsspannung versorgt werden. So wird nur ein Netzteil 10 für mehrere, vorzugsweise alle, Leistungsmodule 3 benötigt. Zusätzlich kann vorgesehen sein, dass weitere Komponenten der Schnellladestation 1, die keinem Leistungsmodul 3 zugeordnet sind, von dem Netzteil 10 mit der Hilfsspannung versorgt werden. Beispielhaft können das weitere Steuereinheiten der Schnellladestation 1 für Anschlusspunkte 2 und/oder ein Display und/oder ein Kreditkartenterminal und/oder LEDs oder dergleichen sein.

Das Leistungsmodul 3 weist mindestens zwei galvanisch voneinander getrennte Bereiche auf. Hier und vorzugsweise weist das Leistungsmodul 3 eine LV-Steuereinheit 12 auf, die die Kommunikationseinheit 8 aufweist oder mit der Kommunikationseinheit 8 verbunden ist. Die LV-Steuereinheit 12 und die Kommunikationseinheit 8 sind vorzugsweise gemeinsam in einem LV-Bereich 13 angeordnet, der keine galvanisch getrennten Unterbereiche 14 aufweist. Weiter kann vorgesehen sein, dass der LV-Bereich 13 galvanisch nicht von dem Netzteil 10 und/oder der zentralen Steuereinheit 9 getrennt ist. Vorzugsweise umfasst der LV-Bereich 13 keine Spannungen größer als die Hilfsspannung und/oder größer als 48 V, vorzugsweise 30 V. Die Hilfsspannung des Netzteils 10 beträgt hier und vorzugsweise 24 V. Hier und vorzugsweise findet eine Kommunikation mit Komponenten außerhalb des Leistungsmoduls 3 nur aus dem LV-Bereich 13 heraus statt.

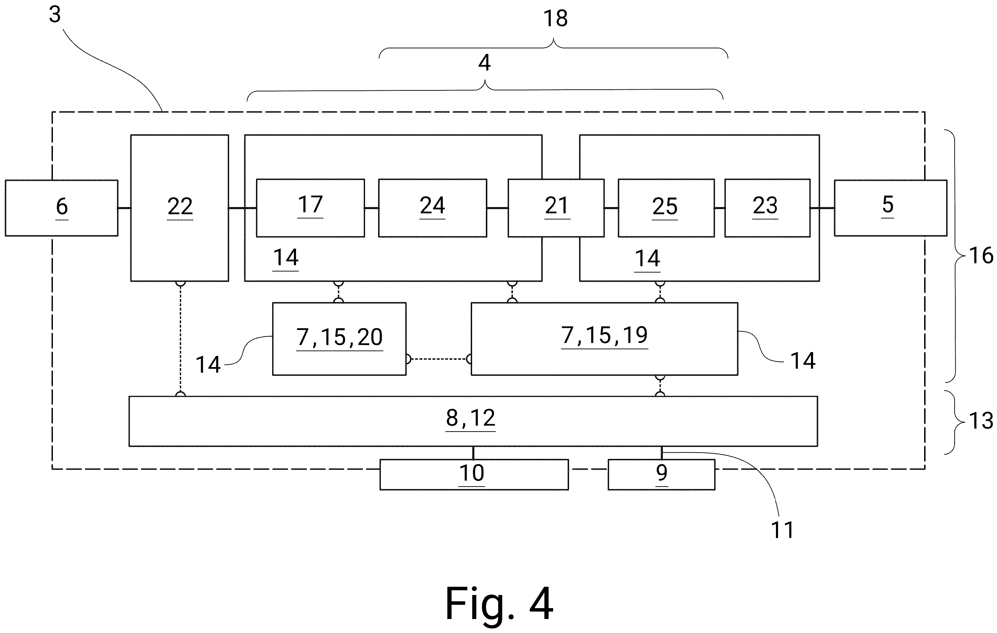

Die Modulsteuereinheit 7 kann eine HV-Steuereinheit 15 sein, die galvanisch von der LV-Steuereinheit 12 getrennt ist. Die HV-Steuereinheit 15 ist hier und vorzugsweise in einem HV-Bereich 16 angeordnet, in dem auch Spannungen größer als 50 V vorhanden sind. Der HV-Bereich 16 kann galvanisch getrennte Unterbereiche 14 aufweisen. Hier und vorzugsweise weist der HV-Bereich 16 einen AC/DC Wandler 17 und/oder einen DC/DC Wandler 18 und/oder eine DC/DC Treiberstufe 19 für den DC/DC Wandler 18 und oder eine AC/DC Treiberstufe 20 für den AC/DC Wandler 17 auf. Der DC/DC Wandler 18 trennt vorzugsweise galvanisch, hier über einen Transformator 21. Diese Komponenten sowie die galvanisch getrennten Kommunikationen (gestrichelt) zeigt Fig. 4. Weiter zeigt Fig. 4 eine Eingangsfilterstufe 22 und eine Ausgangsfilterstufe 23 sowie eine Eingangsseite 24 und eine Ausgangsseite 25 des DC/DC Wandlers 18.

Vorzugsweise aktiviert die Kommunikationseinheit 8 die LV-Steuereinheit 12 oder die LV-Steuereinheit 12 im Übrigen, falls sie Teil der LV-Steuereinheit 12 ist. Die LV-Steuereinheit 12 aktiviert dann vorzugsweise die HV-Steuereinheit 15. Es ist hier und vorzugsweise vorgesehen, dass die LV-Steuereinheit 12 und die HV-Steuereinheit 15 über einen Optokoppler kommunizieren.

Weiter ist hier und vorzugsweise vorgesehen, dass das Kommunikationsnetzwerk 11 ein CAN-Bus ist, und, dass die Kommunikationseinheit 8 ein CAN-Transceiver ist. Vorzugsweise beendet der CAN-Transceiver den Schlafzustand bei Kommunikation auf dem CAN-Bus automatisch. Dabei kann vorgesehen sein, dass der CAN-Transceiver partial networking-fähig ist, sodass einzelne Leistungsmodule 3 gezielt aufgeweckt werden können.

Unabhängig davon ist hier und vorzugsweise vorgesehen, dass das Leistungsmodul 3, wenn es keine Leistung an einem Anschlusspunkt 2 stellt und keine Kommunikation auf dem CAN-Bus empfängt, nach einer vordefinierten Zeitspanne automatisch das Leistungsmodul 3 in den Standbyzustand versetzt.

Weiter ist hier und vorzugsweise vorgesehen, dass die Schnellladestation 1 mindestens zwei Anschlusspunkte 2 aufweist und dass die Leistungsmodule 3 den Anschlusspunkten 2 flexibel zuordenbar sind. Zumindest einige Leistungsmodule 3 können so nach Bedarf dem einen oder dem anderen Anschlusspunkt 2 zugeordnet werden.

Zu Beginn eines Ladevorgangs an einem der Anschlusspunkte 2 ordnet die zentrale Steuereinheit 9 diesem Anschlusspunkt 2 ein oder mehrere Leistungsmodule 3 zu und weckt mindestens diese, vorzugsweise jedoch nicht alle, Leistungsmodule 3 auf. Da zu Beginn des Ladevorgangs nicht immer klar ist, welche Leistung benötigt wird, weckt die zentrale Steuereinheit 9 bevorzugt mehr Leistungsmodule 3 auf, als notwendig. Insbesondere weckt die zentrale Steuereinheit 9 alle verfügbaren Leistungsmodule 3 auf. In manchen Fällen sind dann vorzugsweise nicht alle der aufgeweckten Leistungsmodule 3 anschließend an dem Ladevorgang beteiligt. Es kann vorgesehen sein, dass mindestens ein dem Anschlusspunkt 2 zugeordnetes oder zeitweise, aber mit Bezug zu dem Ladevorgang, zugeordnetes Leistungsmodul 3 während des Ladevorgangs zeitweise im Standbyzustand ist.

Weiter ist hier und vorzugsweise vorgesehen, dass nach Beginn, und vorzugsweise regelmäßig während, des Ladevorgangs die zentrale Steuereinheit 9 eine Leistungsanforderung des Ladevorgangs erfasst und basierend auf der Leistungsanforderung die Zuordnung der Leistungsmodule 3 zu dem Anschlusspunkt 2 anpasst. Die Anpassung nimmt die zentrale Steuereinheit 9 nach Bedarf vor.

Vorzugweise ist es dann so, dass die zentrale Steuereinheit 9 je nach Leistungsanforderung ein weiteres Leistungsmodul 3 dem Anschlusspunkt 2 zuordnet, und/oder, dass die zentrale Steuereinheit 9 je nach Leistungsanforderung die Zuordnung eines Leistungsmoduls 3 zu dem Anschlusspunkt 2 aufhebt. Ersteres ist insbesondere der Fall, wenn die benötigte Leistung steigt, letzteres, wenn sie sinkt.

Vorzugsweise geht das Leistungsmodul 3, dessen Zuordnung aufgehoben wurde, in den Standbyzustand über. Zusätzlich oder alternativ weckt die zentrale Steuereinheit 9 das weitere dem Anschlusspunkt 2 zugeordnete Leistungsmodul 3 auf.

Da ein Leistungsmodul 3 nicht instantan zur Verfügung steht, wenn es aufgeweckt wird, ist es vorzugsweise so, dass die zentrale Steuereinheit 9 basierend auf der Leistungsanforderung eine prädizierte, zukünftige, erhöhte Leistungsanforderung ableitet und basierend auf der prädizierten Leistungsanforderung das weitere Leistungsmodul 3 dem Anschlusspunkt 2 vor Eintritt der prädizierten Leistungsanforderung zuordnet, sodass das Aufwecken des Leistungsmoduls 3 abgeschlossen ist, bevor die zukünftige Leistungsanforderung voraussichtlich eintritt. Eine Aufweckzeit kann der zentralen Steuereinheit 9 dafür bekannt sein. Die Prädiktion kann durch eine Extrapolation, Informationen des Elektrofahrzeuges, Erfahrungswerte oder dergleichen erfolgen.

Weiter ist hier und vorzugsweise vorgesehen, dass im Standbyzustand die Stromrichteranordnung 4 und/oder die Modulsteuereinheit 7, insbesondere als HV-Steuereinheit 15, und/oder die LV-Steuereinheit 12 stromlos geschaltet ist, vorzugsweise, dass im Standbyzustand von allen programmierbaren Logikschaltungen des Leistungsmoduls 3 im Standbyzustand nur der CAN-Transceiver nicht stromlos geschaltet ist.

Ebenfalls kann vorgesehen sein, dass das Leistungsmodul 3 eine interne Hilfsspannungsversorgung 26 aufweist, die galvanisch von dem externen Netzteil 10 getrennt ist. Vorzugsweise ist es dabei so, dass die interne Hilfsspannungsversorgung 26 im Standbyzustand stromlos geschaltet ist, und/oder, dass die interne Hilfsspannungsversorgung 26 ein Spannungsniveau von weniger als 75 %, vorzugsweise weniger als 50 %, des Netzteils 10 aufweist. Vorzugsweise weist die interne Hilfsspannungsversorgung 26 eine Spannung von 5 V oder 3,3 V auf. Die interne Hilfsspannungsversorgung 26 ist hier und vorzugsweise dem HV-Bereich 16 zugeordnet.

Weiter ist hier und vorzugsweise vorgesehen, dass die Schnellladestation 1 eine, insbesondere ohne programmierbare Logik umgesetzte, Notschaltung aufweist, die in einem Fehlerfall eine Notabschaltung mehrerer Leistungsmodule 3 durch eine Notabschaltung des Netzteils 10 umsetzt. Dafür werden vorzugsweise alle einem Anschlusspunkt 2 zugeordneten oder alle Leistungsmodule 3 von dem Netzteil 10 notabgeschaltet, indem das Netzteil 10 die Hilfsspannung den Leistungsmodulen 3 nicht mehr zur Verfügung stellt.

Vorgeschlagen wird gemäß einer weiteren Lehre ein Verfahren zum Betrieb einer Schnellladestation 1 nach einem der vorhergehenden Ansprüche, wobei die Schnellladestation 1 ein Leistungsmodul 3 aufweist, wobei das Leistungsmodul 3 eine Stromrichteranordnung 4, insbesondere zur Wandlung einer Wechselspannung als Eingangsspannung der Schnellladestation 1 in eine Gleichspannung als Ausgangsspannung der Schnellladestation 1, aufweist, wobei das Leistungsmodul 3 eine Modulsteuereinheit 7 zur Steuerung der Stromrichteranordnung 4 aufweist, wobei das Leistungsmodul 3 eine Kommunikationseinheit 8 aufweist, wobei das Leistungsmodul 3 in einen Standbyzustand versetzt werden kann, in dem die Modulsteuereinheit 7 inaktiv ist, wobei die Schnellladestation 1 eine zentrale Steuereinheit 9 aufweist.

Wesentlich nach dieser weiteren Lehre ist, dass die Kommunikationseinheit 8 galvanisch von der Modulsteuereinheit 7 getrennt ist, dass die Schnellladestation 1 ein Netzteil 10 zur Bereitstellung einer Hilfsspannung aufweist, das extern zu dem Leistungsmodul 3 angeordnet ist, dass die Kommunikationseinheit 8 von dem Netzteil 10 mit der Hilfsspannung versorgt wird, dass die Kommunikationseinheit 8 über ein Kommunikationsnetzwerk 11 mit der zentralen Steuereinheit 9 verbunden ist, dass in dem Standbyzustand die Kommunikationseinheit 8 einen Schlafzustand einnimmt, dass im Standbyzustand die Kommunikationseinheit 8 über das Kommunikationsnetzwerk 11 von der zentralen Steuereinheit 9 aufgeweckt werden kann, und, dass die Kommunikationseinheit 8 nach ihrem Aufwecken durch die zentrale Steuereinheit 9 die Modulsteuereinheit 7 aktiviert.

Auf alle Ausführungen zu der vorschlagsgemäßen Schnellladestation 1 darf verwiesen werden.

### Bezugszeichenliste

- 1: Schnellladestation
- 2: Anschlusspunkt
- 3: Leistungsmodul
- 4: Stromrichteranordnung
- 5: Gleichspannungsschiene
- 6: Wechselspannungseingang
- 7: Modulsteuereinheit
- 8: Kommunikationseinheit
- 9: zentrale Steuereinheit
- 10: Netzteil
- 11: Kommunikationsnetzwerk
- 12: LV-Steuereinheit
- 13: LV-Bereich
- 14: Unterbereiche
- 15: HV-Steuereinheit
- 16: HV-Bereich
- 17: AC/DC Wandler
- 18: DC/DC Wandler
- 19: DC/DC Treiberstufe
- 20: AC/DC Treiberstufe
- 21: Transformator
- 22: Eingangsfilterstufe
- 23: Ausgangsfilterstufe
- 24: Eingangsseite
- 25: Ausgangsseite
- 26: interne Hilfsspannungsversorgung

## Patentansprüche

1. Schnellladestation für Elektrofahrzeuge, wobei die Schnellladestation (1) ein Leistungsmodul (3) aufweist, wobei das Leistungsmodul (3) eine Stromrichteranordnung (4), insbesondere zur Wandlung einer Wechselspannung als Eingangsspannung der Schnellladestation (1) in eine Gleichspannung als Ausgangsspannung der Schnellladestation (1), aufweist, wobei das Leistungsmodul (3) eine Modulsteuereinheit (7) zur Steuerung der Stromrichteranordnung (4) aufweist, wobei das Leistungsmodul (3) eine Kommunikationseinheit (8) aufweist, wobei das Leistungsmodul (3) in einen Standbyzustand versetzt werden kann, in dem die Modulsteuereinheit (7) inaktiv ist, wobei die Schnellladestation (1) eine zentrale Steuereinheit (9) aufweist,
**dadurch gekennzeichnet,**
**dass** die Kommunikationseinheit (8) galvanisch von der Modulsteuereinheit (7) getrennt ist, dass die Schnellladestation (1) ein Netzteil (10) zur Bereitstellung einer Hilfsspannung aufweist, das extern zu dem Leistungsmodul (3) angeordnet ist, dass die Kommunikationseinheit (8) von dem Netzteil (10) mit der Hilfsspannung versorgt wird, dass die Kommunikationseinheit (8) über ein Kommunikationsnetzwerk (11) mit der zentralen Steuereinheit (9) verbunden ist, dass in dem Standbyzustand die Kommunikationseinheit (8) einen Schlafzustand einnimmt, dass im Standbyzustand die Kommunikationseinheit (8) über das Kommunikationsnetzwerk (11) von der zentralen Steuereinheit (9) aufgeweckt werden kann, und, dass die Kommunikationseinheit (8) nach ihrem Aufwecken durch die zentrale Steuereinheit (9) die Modulsteuereinheit (7) aktiviert.

2. Schnellladestation nach Anspruch 1, **dadurch gekennzeichnet, dass** die Schnellladestation (1) mindestens zwei Leistungsmodule (3) aufweist, deren Kommunikationseinheiten (8) über das Kommunikationsnetzwerk (11) mit der zentralen Steuereinheit (9) und vorzugsweise einander kommunizieren sind, vorzugsweise, dass die Kommunikationseinheiten (8) von dem Netzteil (10) mit der Hilfsspannung versorgt werden, vorzugsweise, dass weitere Komponenten der Schnellladestation (1), die keinem Leistungsmodul (3) zugeordnet sind, von dem Netzteil (10) mit der Hilfsspannung versorgt werden.

3. Schnellladestation nach Anspruch 1 oder 2, **dadurch gekennzeichnet, dass** das Leistungsmodul (3) eine LV-Steuereinheit (12) aufweist, die die Kommunikationseinheit (8) aufweist oder mit der Kommunikationseinheit (8) verbunden ist, dass die Modulsteuereinheit (7) eine HV-Steuereinheit (15) ist, die galvanisch von der LV-Steuereinheit (12) getrennt ist, vorzugsweise, dass die Kommunikationseinheit (8) die LV-Steuereinheit (12) oder die LV-Steuereinheit (12) im Übrigen aktiviert, dass die LV-Steuereinheit (12) die HV-Steuereinheit (15) aktiviert.

4. Schnellladestation nach einem der vorhergehenden Ansprüche, **dadurch gekennzeichnet, dass** das Kommunikationsnetzwerk (11) ein CAN-Bus ist, dass die Kommunikationseinheit (8) ein CAN-Transceiver ist, vorzugsweise, dass CAN-Transceiver den Schlafzustand bei Kommunikation auf dem CAN-Bus automatisch beendet, weiter vorzugsweise, dass der CAN-Transceiver partial networking-fähig ist, sodass einzelne Leistungsmodule (3) gezielt aufgeweckt werden können.

5. Schnellladestation nach einem der Ansprüche 2 bis 4, **dadurch gekennzeichnet, dass** die Schnellladestation (1) mindestens zwei Anschlusspunkte (2) aufweist, dass die Leistungsmodule (3) den Anschlusspunkten (2) flexibel zuordenbar sind, dass die zentrale Steuereinheit (9) zu Beginn eines Ladevorgangs an einem der Anschlusspunkte (2) diesem Anschlusspunkt (2) ein oder mehrere Leistungsmodule (3) zuordnet und mindestens diese, vorzugsweise jedoch nicht alle, Leistungsmodule (3) aufweckt, vorzugsweise, dass in manchen Fällen nicht alle der aufgeweckten Leistungsmodule (3) anschließend an dem Ladevorgang beteiligt sind.

6. Schnellladestation nach Anspruch 5, **dadurch gekennzeichnet, dass** nach Beginn, und vorzugsweise regelmäßig während, des Ladevorgangs die zentrale Steuereinheit (9) eine Leistungsanforderung des Ladevorgangs erfasst und basierend auf der Leistungsanforderung die Zuordnung der Leistungsmodule (3) zu dem Anschlusspunkt (2) anpasst, dass die zentrale Steuereinheit (9) je nach Leistungsanforderung ein weiteres Leistungsmodul (3) dem Anschlusspunkt (2) zuordnet, und/oder, dass die zentrale Steuereinheit (9) je nach Leistungsanforderung die Zuordnung eines Leistungsmoduls (3) zu dem Anschlusspunkt (2) aufhebt, vorzugsweise, dass das Leistungsmodul (3), dessen Zuordnung aufgehoben wurde, in den Standbyzustand übergeht, und/oder, dass die zentrale Steuereinheit (9) das weitere dem Anschlusspunkt (2) zugeordnete Leistungsmodul (3) aufweckt.

7. Schnellladestation nach Anspruch 6, **dadurch gekennzeichnet, dass** die zentrale Steuereinheit (9) basierend auf der Leistungsanforderung eine prädizierte, zukünftige, erhöhte Leistungsanforderung ableitet und basierend auf der prädizierten Leistungsanforderung das weitere Leistungsmodul (3) dem Anschlusspunkt (2) vor Eintritt der prädizierten Leistungsanforderung zuordnet, sodass das Aufwecken des Leistungsmoduls (3) abgeschlossen ist, bevor die zukünftige Leistungsanforderung voraussichtlich eintritt.

8. Schnellladestation nach einem der vorhergehenden Ansprüche, **dadurch gekennzeichnet, dass** im Standbyzustand die Stromrichteranordnung (4) und/oder die Modulsteuereinheit (7), insbesondere als HV-Steuereinheit (15), und/oder die LV-Steuereinheit (12) stromlos geschaltet ist, vorzugsweise, dass im Standbyzustand von allen programmierbaren Logikschaltungen des Leistungsmoduls (3) im Standbyzustand nur der CAN-Transceiver nicht stromlos geschaltet ist.

9. Schnellladestation nach einem der vorhergehenden Ansprüche, **dadurch gekennzeichnet, dass** das Leistungsmodul (3) eine interne Hilfsspannungsversorgung (26) aufweist, die galvanisch von dem externen Netzteil (10) getrennt ist, vorzugsweise, dass die interne Hilfsspannungsversorgung (26) im Standbyzustand stromlos geschaltet ist, und/oder, dass die interne Hilfsspannungsversorgung (26) ein Spannungsniveau von weniger als 75 %, vorzugsweise weniger als 50 %, des Netzteils (10) aufweist.

10. Schnellladestation nach einem der vorhergehenden Ansprüche, **dadurch gekennzeichnet, dass** die Schnellladestation (1) eine, insbesondere ohne programmierbare Logik umgesetzte, Notschaltung aufweist, die in einem Fehlerfall eine Notabschaltung mehrerer Leistungsmodule (3) durch eine Notabschaltung des Netzteils (10) umsetzt.

11. Verfahren zum Betrieb einer Schnellladestation (1) nach einem der vorhergehenden Ansprüche, wobei die Schnellladestation (1) ein Leistungsmodul (3) aufweist, wobei das Leistungsmodul (3) eine Stromrichteranordnung (4), insbesondere zur Wandlung einer Wechselspannung als Eingangsspannung der Schnellladestation (1) in eine Gleichspannung als Ausgangsspannung der Schnellladestation (1), aufweist, wobei das Leistungsmodul (3) eine Modulsteuereinheit (7) zur Steuerung der Stromrichteranordnung (4) aufweist, wobei das Leistungsmodul (3) eine Kommunikationseinheit (8) aufweist, wobei das Leistungsmodul (3) in einen Standbyzustand versetzt werden kann, in dem die Modulsteuereinheit (7) inaktiv ist, wobei die Schnellladestation (1) eine zentrale Steuereinheit (9) aufweist,
**dadurch gekennzeichnet,**
**dass** die Kommunikationseinheit (8) galvanisch von der Modulsteuereinheit (7) getrennt ist, dass die Schnellladestation (1) ein Netzteil (10) zur Bereitstellung einer Hilfsspannung aufweist, das extern zu dem Leistungsmodul (3) angeordnet ist, dass die Kommunikationseinheit (8) von dem Netzteil (10) mit der Hilfsspannung versorgt wird, dass die Kommunikationseinheit (8) über ein Kommunikationsnetzwerk (11) mit der zentralen Steuereinheit (9) verbunden ist, dass in dem Standbyzustand die Kommunikationseinheit (8) einen Schlafzustand einnimmt, dass im Standbyzustand die Kommunikationseinheit (8) über das Kommunikationsnetzwerk (11) von der zentralen Steuereinheit (9) aufgeweckt werden kann, und, dass die Kommunikationseinheit (8) nach ihrem Aufwecken durch die zentrale Steuereinheit (9) die Modulsteuereinheit (7) aktiviert.
